# EUROPÄISCHE PATENTSCHRIFT

(11) **EP 2 625 226 B1**
(45) Veröffentlichungstag und Bekanntmachung des Hinweises auf die Patenterteilung: **24.02.2016**
(21) Anmeldenummer: 11767952.2
(22) Anmeldetag: 16.09.2011
(51) Int. Cl.: C08L 101/10, C09J 201/10, C08K 5/12, C08K 5/29, C08K 5/3442

(54) **HÄRTBARE ZUSAMMENSETZUNG MIT SPEZIELLEM KATALYSATOR/WEICHMACHER-SYSTEM**
CURABLE COMPOSITION HAVING A SPECIAL CATALYST / SOFTENER SYSTEM
COMPOSITION DURCISSABLE COMPRENANT UN SYSTÈME CATALYSEUR/PLASTIFIANT PARTICULIER

(30) Priorität: 05.10.2010 DE 102010041978
(43) Veröffentlichungstag der Anmeldung: 14.08.2013
(73) Patentinhaber: Henkel AG & Co. KGaA, 40589 Düsseldorf (DE)
(72) Erfinder: BOLTE, Andreas, 42653 Solingen (DE); SPIELKAMP, Nick, 45219 Essen (DE); TAMCKE, Thomas, 40593 Düsseldorf (DE); GAWLIK, Patrick, 40599 Düsseldorf (DE); ZANDER, Lars, 41569 Rommerskirchen (DE)
(86) Internationale Anmeldenummer: PCT/EP2011/066119
(87) Internationale Veröffentlichungsnummer: WO 2012/045566

(56) Entgegenhaltungen:
- EP-A1- 1 930 376
- WO-A1-2010/063740

## Beschreibung

Die vorliegende Erfindung betrifft das Gebiet der härtbaren Zusammensetzungen, wie sie beispielsweise in Kleb-, Dicht- und Beschichtungsstoffen verwendet werden. Insbesondere betrifft die Erfindung feuchtigkeitshärtbare Zusammensetzungen auf Basis silanterminierter Polymere und schlägt den Zusatz eines speziellen Härtungskatalysator/Weichmacher-Systems vor. Die Erfindung betrifft ferner die Verwendung derartiger Zusammensetzungen als Kleb-, Dicht- und/oder Beschichtungsstoff.

Einkomponentige, feuchtigkeitshärtende Kleb- und Dichtstoffe spielen seit Jahren eine bedeutende Rolle bei zahlreichen technischen Anwendungen. Neben den Polyurethan-Kleb- und Dichtstoffen mit freien Isocyanatgruppen und den traditionellen Silikon- Kleb- und Dichtstoffen auf der Basis von Dimethylpolysiloxanen sind in letzter Zeit auch verstärkt die so genannten silanmodifizierten Kleb- und Dichtstoffe eingesetzt worden. Gegenüber den Polyurethan-Kleb- und Dichtstoffen weisen die silanmodifizierten Kleb- und Dichtstoffe den Vorteil auf, dass sie frei von Isocyanatgruppen, insbesondere von monomeren Diisocyanaten, sind. Ferner zeichnen sie sich durch ein breites Haftspektrum auf einer Vielzahl von Substraten ohne Oberflächenvorbehandlung durch Primer aus.

Polymersysteme, die über reaktive Silylgruppen verfügen, sind also prinzipiell bekannt. In Gegenwart von Luftfeuchtigkeit sind Polymere, die über Silylgruppen mit hydrolysierbaren Substituenten verfügen, bereits bei Raumtemperatur in der Lage, unter Abspaltung der hydrolysierten Reste miteinander zu kondensieren. Je nach Gehalt an Silylgruppen mit hydrolysierbaren Substituenten und dem Aufbau dieser Silylgruppen bilden sich dabei hauptsächlich langkettige Polymere (Thermoplaste), relativ weitmaschige, dreidimensionale Netzwerke (Elastomere) oder hochvernetzte Systeme (Duroplaste). Die Polymere weisen in der Regel ein organisches Grundgerüst auf, das an den Enden zum Beispiel Alkoxy- oder Acyloxysilylgruppen trägt. Bei dem organischen Grundgerüst kann es sich beispielsweise um Polyurethane, Polyester, Polyether etc. handeln.

EP 1 535 940 B1 beschreibt ein Verfahren zur Herstellung vernetzbarer Massen, wobei in einem ersten Schritt organyloxysilylterminierte Polymere durch Umsetzung dihydroxyterminierter Polymere mit Isocyanato-funktionellen Silanen hergestellt werden und diese in einem zweiten Schritt mit Silan-Kondensationskatalysator und gegebenenfalls weiteren Stoffen vermischt werden.

Eine härtbare Zusammensetzung auf Basis von Silylgruppen, die durch Siloxan-Bindungsbildung vernetzen können, ist auch Gegenstand von EP 1 930 376 A1, wobei als weiterer Bestandteil eine Aminverbindung als Silanol-Kondensationskatalysator aufgeführt wird.

Eine vernetzbare polymere Zusammensetzung auf Basis silanterminierter Polymere, die im Polymerrückgrat gemischte Oxyalkyleneinheiten aufweisen, wird in WO 2005/047394 A1 beschrieben.

Zur Verbesserung der Eigenschaften, beispielsweise der Verarbeitbarkeit, der silanterminierten Zusammensetzungen werden unter anderem Weichmacher eingesetzt. Als Weichmacher sind beispielsweise die Ester der Phthalsäure - die Phthalate - gebräuchlich, die jedoch aufgrund ihres toxikologischen Potentials zunehmend kritisch gesehen werden. Daher wird nach alternativen Weichmachern gesucht.

EP 1 041 119 A2 beschreibt eine härtbare Zusammensetzung, die neben einem organischen Polymer mit mindestens einer reaktiven Silylgruppe, einer weiteren Verbindung mit einer reaktiven Silylgruppe und einem Zinn-Katalysator auch einen Weichmacher umfasst, der keine Phthalat-Struktur enthält.

WO 2010/063740 A1 hat einen Kleb- oder Dichtstoff zum Gegenstand, der ein silyliertes Polyurethan, Polysulfid oder Polyacrylat oder einen silylierten Polyharnstoff oder Polyether sowie ein Cyclohexanpolycarbonsäure-Derivat enthält.

Es besteht anhaltender Bedarf an Zusammensetzungen auf Basis silylierter Polymere, die unter toxikologischen Gesichtspunkten weitgehend unbedenklich sind und die allen Anforderungen an einen modernen Kleb-, Dicht- und Beschichtungsstoff gewachsen sind. Insbesondere sind häufig Formulierungen gefragt, die nach dem Aushärten eine hinreichend harte Masse ergeben, die gleichzeitig gute Elastizitätswerte aufweist.

Zu den Anforderungen an einen modernen Kleb-, Dicht- und Beschichtungsstoff gehört eine zügige Aushärtung, beispielsweise um die zum Fixieren miteinander verbundener Substrate benötigte Zeit kurz zu halten. Daher werden den Formulierungen in der Regel Katalysatoren zugesetzt, welche die zur Vernetzung beziehungsweise Härtung führende Silanolkondensation beschleunigen. Dabei handelt es sich, wie den vorstehend erwähnten Dokumenten entnommen werden kann, häufig um zinnorganische Verbindungen. Viele Zinnorganyle sind jedoch aufgrund physiologischer und ökologischer Bedenken in die Kritik geraten. Alternative Katalysatoren haben sich entweder als nicht aktiv genug erwiesen oder zeigen unerwünschte Nebenwirkungen, zum Beispiel eine ausgeprägte Tendenz zur Migration.

Viele nicht-zinnorganische Katalysatoren neigen dementsprechend beim Einsatz in feuchtigkeitshärtenden silanbasierten Zusammensetzungen nach dem Aushärten der Zusammensetzung zum "Ausschwitzen" aus den damit hergestellten Produkten. Beispielsweise bildet sich beim Einsatz in Baudichtstoffen dadurch auf der Oberfläche des Produkts ein störender Schmierfilm aus, welcher zum einen die umgebenden Materialien (beispielsweise Holz, empfindliche Metalle) angreifen kann und zum anderen zu optischen Beeinträchtigungen führt (beispielsweise durch Schmutzaufnahme). Beim Einsatz in Klebstoffen wird oft eine Migration der Katalysatoren in die verklebten Materialien beobachtet, die zu unerwünschten Beeinträchtigungen (zum Beispiel Verfärbung) der Materialien führen kann.

Aufgabe der vorliegenden Erfindung ist es daher, eine härtbare Zusammensetzung zur Verfügung zu stellen, die zügig aushärtet, nach erfolgter Vernetzung gute Härte zeigt, gleichzeitig eine verbesserte Dehnbarkeit aufweist und unter gesundheitlichen Aspekten weitgehend bedenkenlos angewendet werden kann. Darüber hinaus sollen durch Katalysatormigration verursachte Probleme wie Schmierfilmbildung an den Substratoberflächen oder Verfärbung der Materialien vermieden werden.

Überraschend hat sich gezeigt, dass diese Aufgabe durch den Einsatz einer speziellen Katalysator-Weichmacher-Kombination gelöst wird. Gegenstand der Erfindung ist daher eine härtbare Zusammensetzung, die mindestens
A) mindestens ein Polymer mit mindestens einer Endgruppe der allgemeinen Formel (I)

   -Aₙ-R-SiXYZ (I),

   worin
   A eine zweibindige, mindestens ein Heteroatom enthaltende Bindegruppe ist,
   R ein zweibindiger Kohlenwasserstoffrest mit 1 - 12 C-Atomen ist, und
   X, Y, Z Substituenten am Si-Atom und unabhängig voneinander C₁- C₈ - Alkyl-, C₁- C₈-Alkoxy- oder C₁- C₈ - Acyloxygruppen sind, wobei mindestens einer der Reste X, Y, Z eine C₁ - C₈ - Alkoxy- oder C₁- C₈ - Acyloxygruppe ist, und
   n 0 oder 1 ist;
B) mindestens eine cyclische Verbindung, die mindestens ein Strukturmotiv der Formel (II) 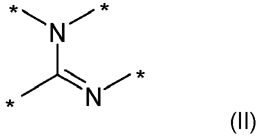 als Bestandteil der Ringstruktur enthält; und
C) mindestens einen Cyclohexandicarbonsäuredialkylester, bei dem die Alkylreste der Estergruppen unabhängig voneinander jeweils 1 bis 20 C-Atome enthalten, enthält.

Eine derartige Zusammensetzung weist nach dem Aushärten gute Shore A - Härteparameter auf und verfügt daneben über eine hervorragende Elastizität. Zudem härtet die Zusammensetzung zügig aus und zeigt keine Phänomene, die sich auf Katalysatormigration zurückführen lassen.

Unter einer "Zusammensetzung" wird im Rahmen der vorliegenden Erfindung ein Gemisch von mindestens zwei Inhaltsstoffen verstanden.
Der Begriff "härtbar" ist dahingehend zu verstehen, dass die Zusammensetzung unter dem Einfluss äußerer Bedingungen, insbesondere unter dem Einfluss in der Umgebung vorhandener und/oder bewusst zugeführter Feuchtigkeit aus einem relativ weichen, gegebenenfalls plastisch verformbaren Zustand in einen härteren Zustand übergehen kann. Allgemein kann die Vernetzung durch chemische und/oder physikalische Einflüsse erfolgen, neben der bereits erwähnten Feuchtigkeit also beispielsweise auch durch Zuführung von Energie in Form von Wärme, Licht oder sonstiger elektromagnetischer Strahlung, aber auch durch einfaches Inkontaktbringen der Zusammensetzung mit Luft oder einer reaktiven Komponente.

Das vorstehend unter A) aufgeführte Polymer mit mindestens einer Endgruppe der allgemeinen Formel (I) ist bevorzugt ein Polyether oder ein Poly(meth)acrylsäureester.

Unter einem Polyether wird ein Polymer verstanden, dessen organische Wiederholungseinheiten Ether-Funktionalitäten C-O-C in der Hauptkette enthalten. Nicht zu den Polyethern werden damit Polymere mit seitenständigen Ether-Gruppen gerechnet, wie zum Beispiel die Celluloseether, Stärkeether und Vinylether-Polymere. Auch Polyacetale wie das Polyoxymethylen (POM) werden im Allgemeinen nicht zu den Polyethern gezählt.

Unter einem Poly(meth)acrylsäureester wird ein Polymer auf der Basis von (Meth)acrylsäureestern verstanden, das daher als Wiederholungseinheit das Strukturmotiv - CH₂-CR^{a}(COOR^{b})- aufweist, worin R^{a} für ein Wasserstoffatom (Acrylsäureester) oder für eine Methylgruppe (Methacrylsäureester) steht und R^{b} für lineare, verzweigte, cyclische und/oder auch funktionelle Substituenten enthaltende Alkylreste, beispielsweise für Methyl-, Ethyl-, Isopropyl-, Cyclohexyl, 2-Ethylhexyl-, oder 2-Hydroxyethylreste steht.

Besonders bevorzugt ist das Polymer mit mindestens einer Endgruppe der allgemeinen Formel (I) ein Polyether. Polyether weisen eine flexible und elastische Struktur auf, mit der man Zusammensetzungen herstellen kann, die hervorragende elastische Eigenschaften aufweisen. Dabei sind Polyether nicht nur in ihrem Grundgerüst flexibel, sondern gleichzeitig beständig. So werden Polyether beispielsweise von Wasser und Bakterien, im Gegensatz zu beispielsweise Polyestern, nicht angegriffen oder zersetzt.

Vorzugsweise beträgt das zahlenmittlere Molekulargewicht Mₙ des dem Polymer bevorzugt zugrunde liegenden Polyethers 2.000 bis 100.000 g/mol (Dalton), wobei das Molekulargewicht besonders bevorzugt mindestens 6.000 g/mol und insbesondere mindestens 8.000 g/mol beträgt. Zahlenmittlere Molekulargewichte von mindestens 2.000 g/mol sind vorteilhaft für die Polyether der vorliegenden Erfindung, weil erfindungsgemäße Zusammensetzungen auf der Basis von Polyethern mit einem solchen Mindestmolekulargewicht signifikante Film bildende Eigenschaften aufweisen. Beispielsweise beträgt das zahlenmittlere Molekulargewicht Mₙ des Polyethers 4.000 bis 100.000, vorzugsweise 8.000 bis 50.000, besonders bevorzugt 10.000 bis 30.000, insbesondere 17.000 bis 27.000 g/mol. Diese Molekulargewichte sind besonders vorteilhaft, da die entsprechenden Zusammensetzungen ein ausgewogenes Verhältnis von Viskosität (leichte Verarbeitbarkeit), Festigkeit und Elastizität aufweisen. Besonders vorteilhaft ist diese Kombination in einem Molekulargewichtsbereich von 18.000 bis 26.000, insbesondere von 20.000 bis 24.000 g/mol, ausgeprägt.

Besonders vorteilhafte viskoelastische Eigenschaften lassen sich erreichen, wenn man Polyether, welche eine enge Molmassenverteilung und damit niedrige Polydispersität besitzen, einsetzt. Diese sind beispielsweise durch die so genannte Double-Metal-Cyanide-Katalyse (DMC-Katalyse) herstellbar. Auf diese Art hergestellte Polyether zeichnen sich durch eine besonders enge Molmassenverteilung, durch eine hohe mittlere Molmasse und durch eine sehr niedrige Zahl an Doppelbindungen an den Enden der Polymerketten aus.
In einer speziellen Ausführungsform der vorliegenden Erfindung beträgt die maximale Polydispersität M_{w}/Mₙ des dem Polymer A zugrunde liegenden Polyethers daher 3, besonders bevorzugt 1,7 und ganz besonders bevorzugt 1,5.

Unter dem Molekulargewicht Mₙ wird das zahlenmittlere Molekulargewicht des Polymeren verstanden. Dieses wird, ebenso wie das gewichtsmittlere Molekulargewicht M_{w}, erfindungsgemäß durch Gelpermeationschromatographie (GPC, auch: SEC) bestimmt. Dieses Verfahren ist dem Fachmann bekannt. Die Polydispersität leitet sich aus den mittleren Molekulargewichten M_{w} und Mₙ ab. Sie wird berechnet als PD = M_{w}/ Mₙ.

Das Verhältnis M_{w}/Mₙ (Polydispersität) gibt die Breite der Molmassenverteilung und damit der unterschiedlichen Polymerisationsgrade der einzelnen Ketten bei polydispersen Polymeren an. Für viele Polymerisate und Polykondensate gilt für die Polydispersität ein Wert von etwa 2. Strenge Monodispersität wäre bei einem Wert von 1 gegeben. Eine geringe Polydispersität von beispielsweise kleiner als 1,5 deutet auf eine vergleichsweise enge Molekulargewichtsverteilung und damit auf die spezifische Ausprägung mit dem Molekulargewicht zusammenhängender Eigenschaften, wie zum Beispiel der Viskosität, hin. Insbesondere weist daher im Rahmen der vorliegenden Erfindung der dem Polymer A zugrunde liegende Polyether eine Polydispersität (M_{w}/Mₙ) von kleiner als 1,3 auf.

Das mindestens eine Polymer der erfindungsgemäßen härtbaren Zusammensetzung weist mindestens eine Endgruppe der allgemeinen Formel (I)

-Aₙ-R-SiXYZ (I),

worin A eine zweibindige, mindestens ein Heteroatom enthaltende Bindegruppe ist,
R ein zweibindiger Kohlenwasserstoffrest mit 1 - 12 C-Atomen ist, und X, Y, Z Substituenten am Si-Atom und unabhängig voneinander C₁ - C₈ - Alkyl-, C₁ - C₈ - Alkoxy- oder C₁ - C₈-Acyloxygruppen sind, wobei mindestens einer der Reste X, Y, Z eine C₁ - C₈ - Alkoxy- oder C₁ - C₈ - Acyloxygruppe ist, und n 0 oder 1 ist, auf.

Dabei wird unter der zweibindigen oder bivalenten, mindestens ein Heteroatom enthaltenden Bindegruppe A eine zweibindige chemische Gruppe verstanden, die das Polymergerüst des alkoxy- und/oder acyloxysilanterminierten Polymers mit dem Rest R der Endgruppe verknüpft. Die zweibindige Bindegruppe A kann beispielsweise bei der Herstellung des alkoxy- und/oder acyloxysilanterminierten Polymers ausgebildet werden, zum Beispiel als Amidbeziehungsweise Urethangruppe durch die Reaktion eines mit Hydroxygruppen funktionalisierten Polyethers mit einem Isocyanatosilan. Dabei kann die bivalente Bindegruppe von im zugrunde liegenden Polymergerüst auftretenden Strukturmerkmalen sowohl unterscheidbar als auch nicht unterscheidbar sein. Letzteres liegt beispielsweise vor, wenn sie mit den Verknüpfungspunkten der Wiederholungseinheiten des Polymergerüsts identisch ist.

Der Index "n" entspricht 0 (Null) oder 1, das heißt die zweibindige Bindegruppe A verknüpft das Polymergrundgerüst mit dem Rest R (n = 1) oder das Polymergerüst ist direkt mit dem Rest R verbunden bzw. verknüpft (n = 0).

Bevorzugt ist die zweibindige Bindegruppe A in der allgemeinen Formel (I) ein Sauerstoffatom oder eine Gruppe -NR'-, worin R' ein H-Atom oder ein Alkyl- oder Arylrest mit 1 bis 12 C-Atomen ist, oder die zweibindige Bindegruppe A enthält eine Amid-, Carbamat-, Harnstoff-, Imino-, Carboxylat-, Carbamoyl-, Amidino-, Carbonat-, Sulfonat- oder Sulfinatgruppe. Besonders bevorzugt als Bindegruppe A sind Urethan- und Harnstoffgruppen, die durch Umsetzung bestimmter funktioneller Gruppen eines Prepolymers mit einem Organosilan, welches eine weitere funktionelle Gruppe trägt, erhalten werden können. Urethangruppen können zum Beispiel entstehen, wenn entweder das Polymergerüst terminale Hydroxygruppen enthält und als weitere Komponente Isocyanatosilane eingesetzt werden, oder wenn umgekehrt ein Polymer, welches endständige Isocyanatgruppen aufweist, mit einem terminale Hydroxygruppen enthaltenden Alkoxysilan umgesetzt wird. Auf ähnliche Weise können Harnstoffgruppen erhalten werden, wenn eine terminale primäre oder sekundäre Aminogruppe - entweder am Silan oder am Polymer - eingesetzt wird, die mit einer im jeweiligen Reaktionspartner vorhandenen terminalen Isocyanatgruppe reagiert. Das bedeutet, dass entweder ein Aminosilan mit einem terminale Isocyanatgruppen aufweisenden Polymer oder ein terminal mit einer Aminogruppe substituiertes Polymer mit einem Isocyanatosilan zur Reaktion gebracht wird.
Urethan- und Harnstoffgruppen erhöhen vorteilhaft die Festigkeit der Polymerketten und des gesamten vernetzten Polymers.

Der Rest R ist ein zweibindiger Kohlenwasserstoffrest mit 1 bis 12 C-Atomen. Bei dem Kohlenwasserstoffrest kann es sich um einen geradkettigen, verzweigten oder cyclischen Alkylenrest handeln. Der Kohlenwasserstoffrest kann gesättigt oder ungesättigt sein. R ist bevorzugt ein zweibindiger Kohlenwasserstoffrest mit 1 bis 6 C-Atomen. Über die Länge der Kohlenwasserstoffreste, die eines der Bindeglieder beziehungsweise das Bindeglied zwischen Polymergerüst und Silylrest bilden, kann die Aushärtungsgeschwindigkeit der Zusammensetzung beeinflusst werden. Besonders bevorzugt ist R eine Methylen-, Ethylen- oder n-Propylengruppe, insbesondere ein Methylen- oder n-Propylenrest. Alkoxysilanterminierte Verbindungen mit einer Methylengruppe als Bindeglied zum Polymergerüst - sogenannte α-Silane - weisen eine besonders hohe Reaktivität der abschließenden Silylgruppe auf, was zu verkürzten Abbindezeiten und damit zu einer sehr schnellen Aushärtung von Formulierungen auf der Basis solcher Polymere führt.
Generell führt eine Verlängerung der verbindenden Kohlenwasserstoffkette zu einer verminderten Reaktivität der Polymere. Insbesondere die γ-Silane - sie enthalten den unverzweigten Propylenrest als Bindeglied -weisen ein ausgewogenes Verhältnis zwischen nötiger Reaktivität (akzeptable Aushärtungszeiten) und verzögerter Aushärtung (offene Zeit, Möglichkeit zur Korrektur nach erfolgter Verklebung) auf. Durch ein bewusstes Kombinieren von α- und γ-Alkoxysilan-terminierten Bausteinen kann somit die Aushärtungsgeschwindigkeit der Systeme wunschgemäß beeinflusst werden.

Die mit dem Si-Atom direkt verbundenen Substituenten X, Y und Z sind unabhängig voneinander C₁ - C₈ - Alkylreste, C₁ - C₈ - Alkoxyreste oder C₁ - C₈ - Acyloxyreste. Dabei muss mindestens einer der Reste X, Y, Z eine hydrolysierbare Gruppe, das heißt ein C₁ - C₈-Alkoxyrest oder ein C₁ - C₈ - Acyloxyrest sein. Als hydrolysierbare Gruppen werden vorzugsweise Alkoxygruppen, insbesondere Methoxy-, Ethoxy-, i-Propyloxy- und i-Butyloxygruppen, gewählt. Dies ist vorteilhaft, da bei der Aushärtung Alkoxygruppen enthaltender Zusammensetzungen keine die Schleimhäute reizenden Stoffe freigesetzt werden. Die durch Hydrolyse der Reste gebildeten Alkohole sind in den freigesetzten Mengen unbedenklich und verdunsten. Daher eignen sich solche Zusammensetzungen insbesondere für den Heimwerkerbereich. Als hydrolysierbare Gruppen können jedoch auch Acyloxygruppen, wie beispielsweise eine Acetoxygruppe -O-CO-CH₃, verwendet werden.

Das/die alkoxy- und/oder acyloxysilanterminierte(n) Polymer(e) weist/weisen bevorzugt mindestens zwei Endgruppen der allgemeinen Formel (I) auf. Jede Polymerkette enthält damit mindestens zwei Verknüpfungsstellen, an denen sich unter Abspaltung der hydrolysierten Reste in Gegenwart von Luftfeuchtigkeit die Kondensation der Polymere vollziehen kann. Auf diese Weise wird eine regelmäßige und schnelle Vernetzbarkeit erreicht, so dass Verklebungen mit guten Festigkeiten erhalten werden können. Darüber hinaus lässt sich über die Menge und den Aufbau der hydrolysierbaren Gruppen - zum Beispiel durch Verwendung von Di- oder Trialkoxysilylgruppen, Methoxygruppen oder längeren Resten - die Ausgestaltung des erzielbaren Netzwerks als langkettiges System (Thermoplaste), relativ weitmaschiges dreidimensionales Netzwerk (Elastomere) oder hochvernetztes System (Duroplaste) steuern, so dass damit unter anderem die Elastizität, die Flexibilität und die Hitzebeständigkeit der fertig vernetzten Zusammensetzungen beeinflusst werden können.

Bevorzugt ist X eine Alkylgruppe und Y und Z sind jeweils unabhängig voneinander eine Alkoxygruppe, oder X, Y und Z sind jeweils unabhängig voneinander eine Alkoxygruppe. Generell verfügen Polymere, die Di- beziehungsweise Trialkoxysilylgruppen enthalten, über hoch reaktive Verknüpfungsstellen, die ein schnelles Aushärten, hohe Vernetzungsgrade und damit gute Endfestigkeiten ermöglichen. Der besondere Vorteil von Dialkoxysilylgruppen liegt darin, dass die entsprechenden Zusammensetzungen nach der Aushärtung elastischer, weicher und flexibler sind als Trialkoxysilylgruppen enthaltende Systeme. Sie sind deshalb insbesondere für eine Anwendung als Dichtstoffe geeignet. Darüber hinaus spalten sie bei der Aushärtung noch weniger Alkohol ab und sind deshalb besonders interessant, wenn die Menge an freigesetztem Alkohol reduziert werden soll.
Mit Trialkoxysilylgruppen hingegen lässt sich ein höherer Vernetzungsgrad erreichen, was besonders vorteilhaft ist, wenn nach der Aushärtung eine härtere, festere Masse gewünscht wird. Darüber hinaus sind Trialkoxysilylgruppen reaktiver, vernetzen also schneller und senken somit die benötigte Menge an Katalysator, und sie weisen Vorteile beim "kalten Fluss" - der Formstabilität eines entsprechenden Klebstoffs unter dem Einfluss von Kraft- und gegebenenfalls Temperatureinwirkung - auf.

Besonders bevorzugt sind die Reste X, Y und Z in der allgemeinen Formel (I) jeweils unabhängig voneinander eine Methyl-, eine Ethyl-, eine Methoxy- oder eine Ethoxygruppe, wobei mindestens einer der Reste eine Methoxy- oder Ethoxygruppe ist. Methoxy- und Ethoxygruppen als vergleichsweise kleine hydrolysierbare Gruppen mit geringem sterischen Anspruch sind sehr reaktiv und ermöglichen somit ein schnelles Aushärten auch bei geringem Katalysatoreinsatz. Sie sind deshalb insbesondere für Systeme interessant, bei denen ein schnelles Aushärten erwünscht ist, wie beispielsweise bei Klebstoffen, die eine hohe Anfangshaftung aufweisen sollen.
Besonders bevorzugt sind X, Y und Z jeweils unabhängig voneinander eine Methyl- oder eine Methoxygruppe, wobei mindestens einer der Reste eine Methoxy-Gruppe ist. Verbindungen mit Alkoxysilylgruppen weisen je nach Natur der Alkylreste am Sauerstoffatom unterschiedliche Reaktivitäten bei chemischen Reaktionen auf. Dabei zeigt innerhalb der Alkoxygruppen die Methoxygruppe die größte Reaktivität. Auf derartige Silylgruppen kann also zurückgegriffen werden, wenn eine besonders schnelle Aushärtung gewünscht wird. Höhere aliphatische Reste wie Ethoxy bewirken eine im Vergleich zu Methoxygruppen bereits geringere Reaktivität der terminalen Alkoxysilylgruppe und können vorteilhaft zur Ausprägung abgestufter Vernetzungsgeschwindigkeiten eingesetzt werden.
Interessante Gestaltungsmöglichkeiten eröffnen auch Kombinationen beider Gruppen. Wird zum Beispiel für X Methoxy und für Y Ethoxy innerhalb derselben Alkoxysilylgruppe gewählt, kann die gewünschte Reaktivität der abschließenden Silylgruppen besonders feinstufig eingestellt werden, falls ausschließlich Methoxygruppen tragende Silylgruppen als zu reaktiv und die Ethoxygruppen tragenden Silylgruppen für den Einsatzzweck als zu träge empfunden werden.

Neben Methoxy- und Ethoxygruppen können selbstverständlich auch größere Reste als hydrolysierbare Gruppen eingesetzt werden, die naturgemäß eine geringere Reaktivität aufweisen. Dies ist besonders dann von Interesse, wenn auch über die Ausgestaltung der Alkoxygruppen eine verzögerte Aushärtung erreicht werden soll.

Der Anteil der Gesamtmenge an Polymeren mit mindestens einer Endgruppe der allgemeinen Formel (I) in der erfindungsgemäßen Zusammensetzung beträgt bevorzugt 5 bis 75 Gew.-%, besonders bevorzugt 10 bis 50 Gew.-%, beispielsweise 12 bis 35 Gew.-%, insbesondere 15 bis 25 Gew.-%, jeweils bezogen auf das Gesamtgewicht der härtbaren Zusammensetzung.

Die erfindungsgemäße Zusammensetzung enthält B) mindestens eine cyclische Verbindung, die mindestens ein Strukturmotiv der Formel (II) 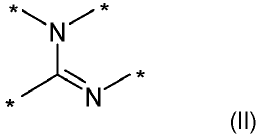 als Bestandteil der Ringstruktur enthält. Die mit * gekennzeichneten Positionen in der Formel (II) entsprechen weiteren Ringatomen oder beliebigen sonstigen Atomen. Unter einer "cyclischen" Verbindung wird eine Verbindung verstanden, in der mindestens einige Atome zu einer oder mehreren Ringstruktur(en) angeordnet sind. Das Merkmal "als Bestandteil der Ringstruktur" ist so zu verstehen, dass die N-C=N-Sequenz der Formel (II) im Rahmen der vorliegenden Erfindung zwingend Bestandteil einer solchen Ringstruktur ist, bei der es sich um einen Monocyclus oder um eine bi- oder poylcyclische Struktur handeln kann. Beide N-Atome sowie das C-Atom dieser Sequenz sind also Ringatome. Cyclische Verbindungen, die eine Struktur gemäß Formel (II) enthalten, haben sich als besonders geeignete Vernetzungskatalysatoren beziehungsweise Härtungskatalysatoren erwiesen.

Beispiele für derartige, erfindungsgemäß einsetzbare heterocyclische Verbindungen sind 1,2-Dimethyl-1,4,5,6-tetrahydropyrimidin, 1-Ethyl-2-methyl-1,4,5,6-tetrahydropyrimidin, 1,2-Diethyl-1,4,5,6-tetrahydropyrimidin, 1-n-Propyl-2-methyl-1,4,5,6-tetrahydropyrimidin, 1-Isopropyl-2-methyl-1,4,5,6-tetrahydropyrimidin, 1-Ethyl-2-n-propyl-1,4,5,6-tetrahydropyrimidin und 1-Ethyl-2-isopropyl-1,4,5,6-tetrahydropyrimidin; cyclische Guanidin-Verbindungen wie 1,5,7-Triazabicyclo[4.4.0]dec-5-en, 7-Methyl-1,5,7-triazabicyclo[4.4.0]dec-5-en, 7-Ethyl-1,5,7-triazabicyclo[4.4.0]dec-5-en, 7-n-Propyl-1,5,7-triazabioyclo[4.4.0]dec-5-en, 7-Isopropyl-1,5,7-triazabicyclo[4.4.0]dec-5-en, 7-n-Butyl-1,5,7-triazabicyclo[4.4.0]dec-5-en, 7-Isobutyl-1,5,7-triazabicyclo[4.4.0]dec-5-en, 7-tert-Butyl-1,5,7-triazabicyclo[4.4.0]dec-5-en, 7-Cyclohecyl-1,5,7-triazabicyclo[4.4.0]dec-5-en, 7-n-Octyl-1,5,7-triazabicyclo[4.4.0]dec-5-en, 7-2-Ethylhexyl-1,5,7-triazabicyclo[4.4.0]dec-5-en und 7-Decyl-1,5,7-triazabicyclo[4.4.0]dec-5-en; sowie 1,5-Diazabicyclo[4.3.0]non-5-en (DBN) und 1,8-Diazabicyclo(5.4.0)undec-7-en (DBU). Bevorzugt enthält die erfindungsgemäße Zusammensetzung als mindestens eine Verbindung, die mindestens ein Strukturmotiv der Formel (II) als Bestandteil der Ringstruktur enthält, 1,5-Diazabicyclo[4.3.0]non-5-en (DBN) und/oder 1,8-Diazabicyclo(5.4.0)undec-7-en (DBU) und besonders bevorzugt 1,8-Diazabicyclo(5.4.0)undec-7-en (DBU).

Die Gesamtmenge an cyclischen Verbindungen, die mindestens ein Strukturmotiv der Formel (II) als Bestandteil der Ringstruktur enthalten, beträgt in der erfindungsgemäßen härtbaren Zusammensetzung bevorzugt 0,01 bis 1 Gew.-%, stärker bevorzugt 0,02 bis 0,5 Gew.-%, beispielsweise 0,03 bis 0,3 Gew.-%, insbesondere 0,04 bis 0,2 Gew.-%, jeweils bezogen auf das Gesamtgewicht der Zusammensetzung.

Ein weiterer Bestandteil der erfindungsgemäßen härtbaren Zusammensetzung ist C) mindestens ein Cyclohexandicarbonsäuredialkylester, bei dem die Alkylreste der Estergruppen unabhängig voneinander jeweils 1 bis 20 C-Atome enthalten. Unter dem "Alkylrest der Estergruppe" wird der Rest R" in einer Estergruppe der allgemeinen Formel -C(O)OR" verstanden. Dem Gegenstand der vorliegenden Erfindung entsprechend handelt es sich bei R" in jeder Estergruppe unabhängig von einander um eine Alkylgruppe mit 1 bis 20 C-Atomen.

Bei den Alkylresten der Estergruppen handelt es sich bevorzugt jeweils unabhängig voneinander um Alkylgruppen mit 4 bis 15 C-Atomen, stärker bevorzugt um Alkylreste mit 6 bis 12 C-Atomen wie zum Beispiel n-Hexyl-, i-Hexyl-, n-Heptyl-, i-Heptyl-, n-Octyl-, i-Octyl-, n-Nonyl-, i-Nonyl-, n-Decyl-, i-Decyl-, n-Undecyl und i-Undecyl-Gruppen. Besonders bevorzugt sind die Alkylreste der Estergruppen unabhängig voneinander jeweils Alkylgruppen mit 8 bis 10 C-Atomen, insbesondere mit 9 C-Atomen, beispielsweise n-Nonylgruppen und i-Nonylgruppen.

Bevorzugt weist der Cyclohexandicarbonsäuredialkylester in den Estergruppen identische Alkylreste auf.

Bezüglich der Position der Estergruppen am Cyclohexanring sind sowohl Cyclohexan-1,4-dicarbonsäuredialkylester als auch Cyclohexan-1,3-dicarbonsäuredialkylester und Cyclohexan-1,2-dicarbonsäuredialkylester möglich, wobei Cyclohexan-1,2-dicarbonsäuredialkylester, in denen die Estergruppen somit an benachbarten Ring-C-Atomen lokalisiert sind, bevorzugt werden.

Die erfindungsgemäße härtbare Zusammensetzung enthält als mindestens einen Cyclohexandicarbonsäuredialkylester, bei dem die Alkylreste der Estergruppen unabhängig voneinander jeweils 1 bis 20 C-Atome enthalten, bevorzugt Cyclohexan-1,2-dicarbonsäurediisononylester, auch bezeichnet als Diisononylcyclohexan-1,2-dicarbonsäurester (DINCH). Diese Verbindung hat sich als besonders geeignet erwiesen, den härtbaren Zusammensetzungen der vorliegenden Erfindung eine gute Verarbeitbarkeit und Applizierbarkeit sowie hervorragende elastische Eigenschaften zu verleihen und trägt darüber hinaus vorteilhaft zur Ausprägung des ausgewogenen Verhältnisses von Härte und Elastizität der Zusammensetzung nach dem Aushärten bei. Der Anteil der Gesamtmenge an Cyclohexandicarbonsäuredialkylestern, bei denen die Alkylreste der Estergruppen unabhängig voneinander jeweils 1 bis 20 C-Atome enthalten, an der erfindungsgemäßen härtbaren Zusammensetzung beträgt vorzugsweise 1 bis 45 Gew.-%, stärker bevorzugt 10 bis 40 Gew.-%, beispielsweise 15 bis 38 Gew.-%, insbesondere 20 bis 30 Gew.-%, jeweils bezogen auf das Gesamtgewicht der Zusammensetzung.

Es hat sich gezeigt, dass beim Einsatz der Cyclohexandicarbonsäuredialkylester in Verbindung mit den cyclischen Substanzen, die mindestens ein Strukturmotiv der Formel (II) enthalten, das Ausschwitzen beziehungsweise die Migration dieser N-heterocyclischen Katalysatoren nicht beobachtet werden und die mit diesen Phänomenen verbundenen Nachteile vermieden werden. Dies ist ein bedeutender Vorteil der vorliegenden Erfindung, da es somit möglich wird, unter Verzicht auf Phthalate und zinnorganische Katalysatoren, aber unter Beibehaltung vorteilhafter technischer Eigenschaften, toxikologisch und ökologisch weitgehend unbedenkliche Zusammensetzungen herzustellen und zu verwenden. In einer speziellen Ausführungsform der vorliegenden Erfindung ist die härtbare Zusammensetzung daher frei von Phthalsäureestern und von zinnorganischen Verbindungen.

Das Merkmal "frei von Phthalsäureestern und von zinnorganischen Verbindungen" ist im Sinne der vorliegenden Erfindung so zu verstehen, dass jeweils noch ein Rest-Gewichtsanteil von < 50 ppm, bevorzugt von < 40 ppm, insbesondere von < 10 ppm, jeweils bezogen auf das Gesamtgewicht der härtbaren Zusammensetzung, zulässig ist.

Dennoch kann es nötig sein, zur Einstellung der elastischen Eigenschaften und zur Verbesserung der Verarbeitbarkeit der Zusammensetzung einen oder mehrere weitere bekannte Weichmacher zuzusetzen. Unter einem Weichmacher wird eine Substanz verstanden, welche die Viskosität der Zusammensetzung verringert und damit die Verarbeitbarkeit erleichtert und darüber hinaus Flexibilität und Dehnungsvermögen der Zusammensetzungen verbessert.

Der Weichmacher ist bevorzugt ausgewählt aus einem Fettsäureester, einem Dicarbonsäureester (Cyclohexandicarbonsäuredialkylester ausgenommen), einem Ester OH-Gruppen tragender oder epoxidierter Fettsäuren, einem Fett, einem Glykolsäureester, einem Benzoesäureester, einem Phosphorsäureester, einem Sulfonsäureester, einem Trimellithsäureester, einem epoxidierten Weichmacher, einem Polyether-Weichmacher, einem Polystyrol, einem Kohlenwasserstoff-Weichmacher und einem chlorierten Paraffin, sowie Gemischen aus zwei oder mehr davon. Durch die gezielte Auswahl eines dieser Weichmacher oder einer spezifischen Kombination können weitere vorteilhafte Eigenschaften der erfindungsgemäßen Zusammensetzung, zum Beispiel Geliervermögen der Polymere, Kälteelastizität beziehungsweise Kältebeständigkeit oder auch antistatische Eigenschaften realisiert werden.

Von den Polyether-Weichmachern werden bevorzugt endgruppenverschlossene Polyethylenglykole eingesetzt, beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon. Ebenfalls als Weichmacher geeignet sind beispielsweise Ester der Abietinsäure, Buttersäureester, Essigsäureester, Propionsäureester, Thiobuttersäureester, Zitronensäureester sowie Ester auf Nitrocellulose- und Polyvinylacetat-Basis, sowie Gemische aus zwei oder mehr davon. Geeignet sind beispielsweise auch die asymmetrischen Ester von Adipinsäuremonooctylester mit 2-Ethylhexanol (Edenol DOA, Fa. Cognis Deutschland GmbH, Düsseldorf). Darüber hinaus sind als Weichmacher geeignet die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf). Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Grundsätzlich können auch Phthalsäureester als Weichmacher eingesetzt werden, diese werden jedoch aufgrund ihres toxikologischen Potentials nicht bevorzugt.

Eine für bestimmte Anwendungen zu hohe Viskosität der erfindungsgemäßen Zusammensetzung kann auch durch Verwendung eines Reaktivverdünners auf einfache und zweckmäßige Weise verringert werden, ohne dass es zu Entmischungserscheinungen (zum Beispiel Weichmacherwanderung) in der ausgehärteten Masse kommt. Vorzugsweise weist der Reaktivverdünner mindestens eine funktionelle Gruppe auf, die nach der Applikation zum Beispiel mit Feuchtigkeit oder Luftsauerstoff reagiert. Beispiele für derartige Gruppen sind Silylgruppen, Isocyanatgruppen, vinylisch ungesättigte Gruppen und mehrfach ungesättigte Systeme. Als Reaktivverdünner kann man alle Verbindungen, die mit der erfindungsgemäßen Zusammensetzung unter Verringerung der Viskosität mischbar sind und über mindestens eine mit dem Bindemittel reaktive Gruppe verfügen, allein oder als Kombination mehrerer Verbindungen einsetzen. Die Viskosität des Reaktivverdünners beträgt bevorzugt weniger als 20.000 mPas, besonders bevorzugt etwa 0,1 -6.000 mPas, ganz besonders bevorzugt 1-1000 mPas (Brookfield RVT, 23 °C, Spindel 7, 10 U/min).

Als Reaktivverdünner lassen sich beispielsweise folgende Stoffe einsetzen: mit Isocyanatosilanen umgesetzte Polyalkylenglykole (zum Beispiel Synalox 100-50B, DOW), Alkyltrimethoxysilan, Alkyltriethoxysilan, wie Methyltrimethoxysilan, Methyltriethoxysilan sowie Vinyltrimethoxysilan (XL 10, Wacker), Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan und Teilhydrolysate dieser Verbindungen. Ferner sind ebenfalls folgende Polymere von Kaneka Corp. als Reaktivverdünner einsetzbar: MS S203H, MS S303H, MS SAT 010, und MS SAX 350. Weiterhin als Reaktivverdünner geeignet sind Polymere, die aus einem organischen Grundgerüst durch Pfropfen mit einem Vinylsilan oder durch Umsetzung von Polyol, Polyisocyanat und Alkoxysilan herstellbar sind.

Unter einem Polyol wird eine Verbindung verstanden, die im Molekül eine oder mehrere OH - Gruppen enthält. Die OH -Gruppen können sowohl primär als auch sekundär sein.
Zu den geeigneten aliphatischen Alkoholen zählen beispielsweise Ethylenglykol, Propylenglykol und höhere Glykole, sowie andere polyfunktionelle Alkohole. Die Polyole können zusätzlich weitere funktionelle Gruppen wie zum Beispiel Ester, Carbonate, Amide enthalten. Zur Herstellung eines Reaktivverdünners durch Umsetzung von Polyol mit Polyisocyanat und Alkoxysilan wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen bevorzugt. Unter den Alkoxysilylgruppen sind die Di- und Trialkoxysilylgruppen bevorzugt.

Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4-und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Dii-socyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylme-thandiisocyanat (MDI) oder deren partiell oder vollständig hydrierte Cycloalkylderivate, beispielsweise vollständig hydriertes MDI (H12-MDI), alkylsubstituierte Diphenylmethan-diisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophe-nylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanat, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate.

Ebenso kann man als Polyisocyanate drei- oder höherwertige Isocyanate, wie sie beispielsweise durch Oligomerisierung von Diisocyanaten, insbesondere durch Oligomerisierung der oben genannten Isocyanate, erhältlich sind, einsetzen. Beispiele für solche drei- und höherwertigen Polyisocyanate sind die Tri-isocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Zur Reduzierung der Viskosität der erfindungsgemäßen Zusammensetzung lassen sich neben oder anstatt eines Reaktivverdünners auch Lösungsmittel einsetzen. Als Lösungsmittel eignen sich aliphatische oder aromatische Kohlenwasserstoffe, halogenierte Kohlenwasserstoffe, Alkohole, Ketone, Ether, Ester, Esteralkohole, Ketoalkohole, Ketoether, Ketoester und Etherester. Vorzugsweise werden allerdings Alkohole eingesetzt, da in diesem Fall die Lagerstabilität steigt. C₁-C₁₀-Alkohole, besonders Methanol, Ethanol, i-Propanol, Isoamylalkohol und Hexanol werden besonders bevorzugt.

Die erfindungsgemäße Zusammensetzung kann außerdem einen Haftvermittler umfassen. Unter einem Haftvermittler wird eine Substanz verstanden, die die Haftungseigenschaften von Klebeschichten auf Oberflächen verbessert. Es können übliche, dem Fachmann bekannte Haftvermittler (Tackifier) allein oder als Kombination mehrerer Verbindungen eingesetzt werden. Geeignet sind beispielsweise Harze, Terpen-Oligomere, Cumaron-/Inden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich α- od. β-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden auch Copolymere aus Terpenen und anderen Monomeren, beispielsweise Styrol, α-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Haftvermittler im oben genannten Sinne geeignet sind die Kolophoniumharze und deren Derivate, beispielsweise deren Ester oder Alkohole. Besonders gut geeignet sind Silan-Haftvermittler, insbesondere Aminosilane.

In einer speziellen Ausführungsform der erfindungsgemäßen härtbaren Zusammensetzung umfasst die Zusammensetzung ein Silan der allgemeinen Formel (III)

R¹R²N-R³-SiXYZ (III)

als Haftvermittler, worin
R¹ und R² unabhängig voneinander Wasserstoff oder C₁ - C₈ -Alkylreste,
R³ ein zweibindiger gegebenenfalls ein Heteroatom enthaltender Kohlenwasserstoffrest mit 1 - 12 C-Atomen, und
X, Y, Z jeweils unabhängig voneinander C₁ - C₈ - Alkyl-, C₁ - C₈ - Alkoxy- oder C₁ - C₈-Acyloxyreste sind, wobei mindestens einer der Reste X, Y, Z eine C₁ - C₈ - Alkoxy- oder C₁-C₈ - Acyloxygruppe ist. Derartige Verbindungen weisen naturgemäß eine hohe Affinität zu den bindenden Polymerkomponenten der erfindungsgemäßen härtbaren Zusammensetzung, aber auch zu einer großen Bandbreite an polaren sowie unpolaren Oberflächen auf und tragen deshalb zur Ausbildung einer besonders stabilen Haftung zwischen der Klebstoffzusammensetzung und den jeweils zu verklebenden Substraten bei.
Bei der Bindegruppe R³ kann es sich beispielsweise um einen geradkettigen oder verzweigten oder cyclischen, substituierten oder unsubstituierten Alkylenrest handeln. Gegebenenfalls ist als Heteroatom darin Stickstoff (N) oder Sauerstoff (O) enthalten. Wenn X, Y und/oder Z eine Acyloxygruppe sind, kann dies zum Beispiel die Acetoxygruppe -OCO-CH₃ sein.

Ein oder mehrere Haftvermittler ist/sind bevorzugt zu 0,1 bis 5 Gew.-%, stärker bevorzugt zu 0,2 bis 2 Gew.-%, insbesondere zu 0,3 bis 1 Gew.-%, jeweils bezogen auf das Gesamtgewicht der Zusammensetzung, in der erfindungsgemäßen härtbaren Zusammensetzung enthalten.

Als Füllstoffe für die erfindungsgemäße Zusammensetzung eignen sich beispielsweise Kreide, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Sand, Quartz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet. Darüber hinaus eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis sind beispielsweise unter den Bezeichnungen Expancel® oder Dualite® kommerziell erhältlich. Diese sind aus anorganischen oder organischen Stoffen zusammengesetzt, jede mit einem Durchmesser von 1 mm oder weniger, bevorzugt von 500 µm oder weniger. Für manche Anwendungen sind Füllstoffe bevorzugt, die den Zubereitungen Thixotropie verleihen. Solche Füllstoffe werden auch als rheologische Hilfsmittel beschrieben, zum Beispiel hydrogenisiertes Rizinusöl, Fettsäureamide oder quellbare Kunststoffe wie PVC. Damit sie gut aus einer geeigneten Dosiervorrichtung (zum Beispiel Tube) ausgepresst werden können, besitzen solche Zubereitungen eine Viskosität von 3.000 bis 15.000, vorzugsweise 4.000 bis 8.000 mPas oder auch 5.000 bis 6.000 mPas.
Die Füllstoffe werden vorzugsweise in einer Menge von 1 bis 80 Gew.-%, stärker bevorzugt von 10 bis 70 Gew.-%, beispielsweise von 25 bis 60 Gew.-%, insbesondere von 35 bis 55 Gew.-%, bezogen auf das Gesamtgewicht der erfindungsgemäßen Zusammensetzung, eingesetzt. Es kann ein einzelner Füllstoff oder eine Kombination mehrerer Füllstoffe verwendet werden.

Beispielsweise wird als Füllstoff eine hochdisperse Kieselsäure mit einer BET-Oberfläche von 10 bis 500 m²/g eingesetzt. Bei ihrer Verwendung bewirkt eine derartige Kieselsäure keine wesentliche Erhöhung der Viskosität der erfindungsgemäßen Zusammensetzung, trägt aber zu einer Verstärkung der gehärteten Zubereitung bei. Über diese Verstärkung werden zum Beispiel die Anfangsfestigkeiten, Zugscherfestigkeiten und die Adhäsion der Kleb-, Dicht- oder Beschichtungsstoffe, in denen die erfindungsgemäße Zusammensetzung verwendet wird, verbessert. Bevorzugt werden ungecoatete Kieselsäuren mit einer BET-Oberfläche von kleiner als 100, stärker bevorzugt von kleiner als 65 m²/g, und/oder gecoatete Kieselsäuren mit einer BET-Oberfläche 100 bis 400, stärker bevorzugt von 100 bis 300, insbesondere von 150 bis 300 und ganz besonders bevorzugt von 200 bis 300 m²/g eingesetzt.

Als Zeolithe werden bevorzugt Alkali-Alumosilikate eingesetzt, beispielsweise Natrium-Kalium-Alumosilikate der allgemeinen Summenformel aK₂O*bNa₂O*Al₂O₃*2SiO*nH₂O mit 0 < a, b < 1 und a + b = 1. Vorzugsweise ist die Porenöffnung des eingesetzten Zeoliths beziehungsweise der eingesetzten Zeolithe gerade groß genug, um Wassermoleküle aufzunehmen. Dementsprechend ist eine effektive Porenöffnung der Zeolithe von weniger als 0,4 nm bevorzugt. Besonders bevorzugt beträgt die effektive Porenöffnung 0,3 nm ± 0,02 nm. Der/die Zeolith(e) wird/werden vorzugsweise in Form eines Pulvers eingesetzt.

Bevorzugt wird Kreide als Füllstoff verwendet. Als Kreide können dabei kubische, nicht kubische, amorphe und andere Modifikationen von Calciumcarbonat eingesetzt werden. Vorzugsweise sind die eingesetzten Kreiden oberflächenbehandelt beziehungsweise beschichtet. Als Beschichtungsmittel werden bevorzugt Fettsäuren, Fettsäureseifen und Fettsäureester eingesetzt, beispielsweise Laurinsäure, Palmitinsäure oder Stearinsäure, Natrium- oder Kaliumsalze solcher Säuren oder ihre Alkylester. Darüber hinaus kommen aber auch andere oberflächenaktive Substanzen wie Sulfatester langkettiger Alkohole oder Alkylbenzolsulfonsäuren beziehungsweise deren Natrium- oder Kaliumsalze oder auch Kopplungsreagenzien auf der Basis von Silanen oder Titanaten in Frage. Mit der Oberflächenbehandlung der Kreiden ist häufig eine Verbesserung der Verarbeitbarkeit sowie der Klebkraft und auch der Wetterresistenz der Zusammensetzungen verbunden. Das Beschichtungsmittel wird üblicherweise in einem Anteil von 0,1 bis 20 Gew.%, bevorzugt 1 bis 5 Gew.%, bezogen auf das Gesamtgewicht der Rohkreide, eingesetzt.

Je nach angestrebtem Eigenschaftsprofil können gefällte oder gemahlene Kreiden oder Gemische davon verwendet werden. Gemahlene Kreiden können zum Beispiel aus natürlichem Kalk, Kalkstein oder Marmor durch mechanisches Zermahlen hergestellt werden, wobei trockene oder feuchte Methoden zur Anwendung gelangen können. Je nach Mahlverfahren werden Fraktionen mit unterschiedlicher durchschnittlicher Teilchengröße erhalten. Vorteilhafte spezifische Oberflächenwerte (BET) liegen zwischen 1,5 m²/g und 50 m²/g.

Ferner kann die erfindungsgemäße Zusammensetzung Antioxidantien enthalten. Vorzugsweise beträgt der Anteil der Antioxidantien an der erfindungsgemäßen Zusammensetzung bis zu 7 Gew.-%, insbesondere bis zu 5 Gew.-%, jeweils bezogen auf das Gesamtgewicht der Zusammensetzung. Die erfindungsgemäße Zusammensetzung kann darüber hinaus UV-Stabilisatoren enthalten. Vorzugsweise beträgt der Anteil der UV-Stabilisatoren an der erfindungsgemäßen Zusammensetzung bis zu 2 Gew.-%, insbesondere bis zu 1 Gew.-%. Als UV-Stabilisatoren besonders geeignet sind die so genannten Hindered Amine Light Stabilisators (HALS). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden.

Häufig ist es sinnvoll, die erfindungsgemäße Zusammensetzung weiter gegenüber eindringender Feuchtigkeit zu stabilisieren, um die Lagerfähigkeit (shelf-life) noch stärker zu erhöhen. Eine solche Verbesserung der Lagerfähigkeit lässt sich beispielsweise durch den Einsatz von Trockenmitteln erreichen. Als Trockenmittel eignen sich alle Verbindungen, die mit Wasser unter Bildung einer gegenüber den in der Zusammensetzung vorliegenden reaktiven Gruppen inerten Gruppe reagieren, und hierbei möglichst geringe Veränderungen ihres Molekulargewichts erfahren. Weiterhin muss die Reaktivität der Trockenmittel gegenüber in die Zusammensetzung eingedrungener Feuchtigkeit höher sein als die Reaktivität der Endgruppen des in der Zusammensetzung vorliegenden erfindungsgemäßen Silyl-Gruppen tragenden Polymers. Als Trockenmittel eignen sich beispielsweise Isocyanate.

Vorteilhaft werden als Trockenmittel auch Silane eingesetzt, beispielsweise Vinylsilane wie 3-Vinylpropyltriethoxysilan, Oximsilane wie Methyl-O,O',O''-butan-2-on-trioximosilan oder O,O',O",O"'-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder -ethylethoxysilan ist möglich. Besonders bevorzugt sind hier Vinyltrimethoxysilan und Tetraethoxysilan hinsichtlich Effizienz und Kosten. Ebenfalls als Trockenmittel geeignet sind die oben genannten Reaktivverdünner, sofern sie ein Molekulargewicht (Mₙ) von weniger als etwa 5.000 g/mol aufweisen und über Endgruppen verfügen, deren Reaktivität gegenüber eingedrungener Feuchtigkeit mindestens genauso groß, bevorzugt größer, ist als die Reaktivität der reaktiven Gruppen des erfindungsgemäßen Silyl-Gruppen tragenden Polymers. Schließlich können als Trockenmittel auch Alkylorthoformiate oder -orthoacetate eingesetzt werden, beispielsweise Methyl- oder Ethylorthoformiat, Methyl- oder Ethylorthoacetat. Die erfindungsgemäße Zusammensetzung enthält vorzugsweise 0,01 bis 10 Gew.-% Trockenmittel, bezogen auf das Gesamtgewicht der Zusammensetzung.

Vorzugsweise enthält die erfindungsgemäße Zusammensetzung folgende Bestandteile in den angegebenen Gewichtsanteilen:

| | |
|---|---|
| mindestens ein Polymer der allgemeinen Formel (I) | 5-75 Gew.-% |
| | |
| mindestens eine cyclische Verbindung, die mindestens ein Strukturmotiv der Formel (II) als Bestandteil der Ringstruktur enthält, | 0,01-1 Gew.-% |
| | |
| mindestens einen Cyclohexandicarbonsäuredialkylester, bei dem die Alkylreste der Estergruppen jeweils unabhängig voneinander 1 bis 20 C-Atome enthalten, | 1-45 Gew.-% |
| | |
| einen oder mehrere Füllstoff(e) | 1-80 Gew.-% |
| | |
| einen oder mehrere Hilfsstoff(e) | 0-10 Gew.-%, |

wobei sich die Gewichtsanteile zu 100 Gew.-% aufaddieren und die Gewichtsanteile auf das Gesamtgewicht der härtbaren Zusammensetzung bezogen sind.

Als Hilfsstoffe kann die erfindungsgemäße Zusammensetzung über die bereits aufgeführten Bestandteile hinaus beispielsweise Stabilisatoren, UV-Stabilisatoren, Alterungsschutzmittel, rheologische Hilfsmittel, Farbpigmente oder Farbpasten, Fungizide, Flammschutzmittel und/oder gegebenenfalls auch in geringem Umfang Lösungsmittel enthalten.

Die Herstellung der erfindungsgemäßen Zusammensetzung erfolgt nach bekannten Verfahren durch inniges Vermischen der Bestandteile in geeigneten Dispergieraggregaten, zum Beispiel einem Schnellmischer.

Ein weiterer Gegenstand der vorliegenden Erfindung ist die Verwendung einer Kombination eines Cyclohexandicarbonsäuredialkylesters, bei dem die Alkylreste der Estergruppen unabhängig voneinander jeweils 1 bis 20 C-Atome enthalten, mit einer cyclischen Verbindung, die mindestens ein Strukturmotiv der allgemeinen Formel (II) 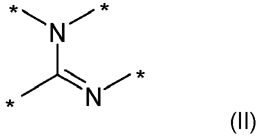 als Bestandteil der Ringstruktur enthält, als Weichmacher-Härtungskatalysator-System in härtbaren Zusammensetzungen. Besonders vorteilhaft ist die Verwendung einer Kombination von Diisononylcyclohexandicarbonsäureester (DINCH) mit 1,8-Diazabicyclo(5.4.0)undec-7-en (DBU), als Weichmacher-Härtungskatalysator-System in härtbaren Zusammensetzungen, insbesondere in härtbaren Zusammensetzungen, die silanterminierte Polymere enthalten. Unter einem "silanterminierten Polymer" wird dabei ein Polymer verstanden, das an mindestens einem Terminus eine Silylgruppe trägt, die ihrerseits mindestens einen hydrolysierbaren Substituenten aufweist. Polymere mit Endgruppen der vorstehend beschriebenen allgemeinen Formel (I) fallen selbstverständlich unter diese Definition. Ganz besonders bevorzugt ist die Verwendung einer Kombination von Diisononylcyclohexandicarbonsäureester (DINCH) mit 1,8-Diazabicyclo(5.4.0)undec-7-en (DBU), als Weichmacher-Härtungskatalysator-System in härtbaren Zusammensetzungen, die mindestens ein Polymer mit mindestens einer Endgruppe der allgemeinen Formel (I)

-Aₙ-R-SiXYZ (I),

worin
A eine zweibindige, mindestens ein Heteroatom enthaltende Bindegruppe ist,
R ein zweibindiger Kohlenwasserstoffrest mit 1 - 12 C-Atomen ist, und
X, Y, Z Substituenten am Si-Atom und unabhängig voneinander C₁ - C₈ - Alkyl-, C₁ - C₈-Alkoxy- oder C₁ - C₈ - Acyloxygruppen sind, wobei mindestens einer der Reste X, Y, Z eine C₁ - C₈ - Alkoxy- oder C₁ - C₈ - Acyloxygruppe ist, und
n 0 oder 1 ist, enthalten.

Ein weiterer Gegenstand der vorliegenden Erfindung ist die Verwendung der erfindungsgemäßen härtbaren Zusammensetzung als Kleb-, Dicht- und/oder Beschichtungsstoff.

Grundsätzlich können in der vorliegenden Erfindung alle im Rahmen des vorliegenden Textes aufgeführten Merkmale, insbesondere die als bevorzugt und/oder speziell ausgewiesenen Ausführungsformen, Anteilsbereiche, Bestandteile und sonstigen Merkmale der erfindungsgemäßen Zusammensetzung und der erfindungsgemäßen Verwendungen in allen möglichen und sich nicht gegenseitig ausschließenden Kombinationen verwirklicht sein, wobei Kombinationen von als bevorzugt und/oder speziell ausgewiesenen Merkmalen ebenfalls als bevorzugt und/oder speziell angesehen werden.

### Beispiele

### Allgemeine Vorschrift zur Herstellung der Polymere:

282 g (15 mmol) Polypropylenglykol 18000 (OHZ=6,0) wurden in einem 500 ml Dreihalskolben bei 100°C im Vakuum getrocknet. Unter Stickstoffatmosphäre wurde bei 80°C 0,1 g Katalysator (Polymer 1a: Dibutylzinndilaurat; Polymer 1b: Bismuth-neodecanoat-Zubereitung (Catalyst 315 von OMG Borchers)) hinzugegeben und anschließend mit 7,2 g (32 mmol) 3-Isocyanatopropyltrimethoxysilan (NCO-Gehalt = 18,4%) versetzt. Nach einstündigem Rühren bei 80°C wurde das entstandene Polymer abgekühlt und anschließend mit 6 g Vinyltrimethoxysilan und 3 g Irganox 245 versetzt.

Allgemeine Vorschrift zur Herstellung der härtbaren Zusammensetzungen (Mengen und Angaben zur Identität der Komponenten siehe nachfolgende Tabelle 1):
Das jeweilige Polymer 1 wird mit der entsprechenden Komponente 2 in einem Speedmixer 30 s innig vermengt. In diese Mischung werden nacheinander die jeweiligen Komponenten 3 bis 9 eingebracht. Das so entstandene Gemisch wird für 30 s im Speedmixer innig vermengt.

### Testmethoden

### Mechanische Daten:

Die jeweils gemäß der vorstehenden Vorschrift erhaltenen Mischungen wurden gemäß ISO 8339-A mit Aluminium als Substrat geprüft, wobei der Modul und die Bruchdehnung bestimmt wurden. Ferner wurde die Shore A-Härte gemäß ISO 868 bestimmt.

### DBU-Migrationstest:

Eine Raupe (ca. 15 mm breit, ca. 5 mm dick, ca. 80 mm lang) wird bei Raumtemperatur auf eine Glasplatte aufgetragen und anschließend bei 23°C/50% relative Luftfeuchtigkeit gelagert. Der Prüfkörper wird nach 7 und 28 Tagen auf das Vorhandensein von Migrationserscheinungen in Form eines Schmierfilms auf der Glasplatte und der Oberfläche des Prüfkörpers geprüft. Treten Migrationserscheinungen auf, wird der Prüfkörper mit "nok" bewertet, ansonsten mit "ok".

### Zugscherversuch - Messung der Bruchkraft:

Um das Härtungsverhalten von katalysierten Kleb- und Dichtstoffen zeitlich beobachten zu können, wird die Entwicklung der Bruchkraft gegen die Zeit beobachtet. Dazu werden Probekörper hergestellt, die aus zwei überlappend verklebten Holzplättchen bestehen. Diese werden anschließend in einer Zerreißmaschine bis zum Bruch gedehnt und die benötigten Kräfte gemessen.

### Herstellen der Prüfkörper für den Zugscherversuch

Pro Messung werden drei Prüfkörper benötigt. Ein Buchensperrholzplättchen (80x40x4mm, vorgelagert bei 23°C, 50% relative Luftfeuchte) wird in Längsrichtung bis zur Hälfte (20mm) mit dem zu prüfenden Kleb-/Dichtstoff bestrichen. Als Abstandhalter werden in den Kleb-/Dichtstofffilm vier 2mm dicke Metallkugeln aufgelegt. Dann wird ein zweites Sperrholzplättchen auf den Kleb-/Dichtstoff aufgelegt und mit den Händen zusammengepresst, bis durch die Metallkugeln bedingt ein 2mm dicker Kleb-/Dichstofffilm zwischen den beiden Sperrholzplättchen entsteht. An den Seiten heraustretendes Material wird mit einem Spachtel entfernt. Nun werden die Probekörper bei 23°C für unterschiedliche Zeit gelagert. Die Lagerung erfolgt auf PE-Folie, wobei jeder der drei Probekörper mit einem Gewicht von ca. 300g belastet wird.

### Zugscherversuch - Durchführung der Messung

Die Prüfkörper werden nach 1, 2, 4, 8, 16, 24 und 48 Stunden in einer Erichsen-Zerreißmaschine bis zum Bruch gedehnt. Der maximale Kraftwerk wird ermittelt und ein Mittelwert pro Zeiteinheit aus den drei Messungen gebildet.

**Tabelle 1: Zusammensetzungen (Angaben in Gew.-%)**

| Nr. | Komponente | Bsp.1 | Bsp.2 | Bsp.3 | Bsp.4 | Bsp.5 | Bsp.6 | Bsp.7 |
|---|---|---|---|---|---|---|---|---|
| 1 | Polymer 1a | 20 | 20 | | 20 | 20 | 20 | 20 |
| 1 | Polymer 1b | | | 20 | | | | |
| 2 | Diisononylcyclohexan-1,2-dicarbonsäurediester | | 25 | 25 | 25 | 25 | 25 | 25 |
| 2 | Diisoundecylphthalat | 25 | | | | | | |
| 3 | Calciumcarbonat, mit Stearinsäure gecoatet | 30 | 30 | 30 | 30 | 30 | 30 | 30 |
| 3 | Calciumcarbonat, ungecoatet | 15 | 15 | 15 | 13,9 | 13,9 | 13,9 | 13,9 |
| 4 | Titandioxid | 2,9 | 2,9 | 2,9 | 2,9 | 2,9 | 2,9 | 2,9 |
| 5 | Hydriertes Castoröl | 4,5 | 4,5 | 4,5 | 5 | 5 | 5 | 5 |
| 6 | Vinyltrimethoxysilan | 1,5 | 1,5 | 1,5 | 1,5 | 1,5 | 1,5 | 1,5 |
| 7 | 3-Aminopropyltrimethoxysilan | 0,5 | 0,5 | 0,5 | 0,5 | 0,5 | 0,5 | 0,5 |
| 8 | Hilfsstoffe (UV-Absorber + Alkylpolysiloxan) | 0,5 | 0,5 | 0,5 | 1,1 | 1,1 | 1,1 | 1,1 |
| 9 | DBU | 0,1 | 0,1 | 0,1 | 0,1 | | | |
| 9 | Sn-Katalysator (Metatin Catalyst 740) | | | | | 0,1 | | |
| 9 | Ti-Katalysator (Tyzor TnBT) | | | | | | 0,1 | |
| 9 | Zr-Katalysator (Vertec VEXP 0588) | | | | | | | 0,1 |
| Gesamt | | 100 | 100 | 100 | 100 | 100 | 100 | 100 |

| | | | | | | | | |
|---|---|---|---|---|---|---|---|---|
| Bsp. = Beispiel Beispiele 1, 5, 6 und 7: nicht erfindungsgemäß Beispiele 2, 3 und 4: erfindungsgemäß | | | | | | | | |

### Ergebnisse

**Tabelle 2: Testergebnisse**

| Parameter | Einheit | Methode | Beispiel 1 | Beispiel 2 | Beispiel 3 |
|---|---|---|---|---|---|
| Hautbildung | min | 23°C/50% relative Luftfeuchte | 35 | 40 | 23 |
| Shore A-Härte | - | ISO 868 | 39 | 31 | 32 |
| Modul 100% | N/mm² | ISO 8339-A (Aluminium) | 0,77 | 0,54 | 0,59 |
| Bruchdehnung | % | ISO 8339-A (Aluminium) | 260 | 535 | 450 |
| DBU-Migration | ok, nok | s. o. | nok | ok | ok |

Die Ergebnisse aus Tabelle 2 zeigen deutlich, dass die erfindungsgemäßen Zusammensetzungen bei guten Härte-Werten deutlich verbesserte elastische Eigenschaften (Modul, Bruchdehnung) aufweisen und darüber hinaus keine DBU-Migrationserscheinungen zeigen, wie sie bei der nicht erfindungsgemäßen Zusammensetzung auftreten.

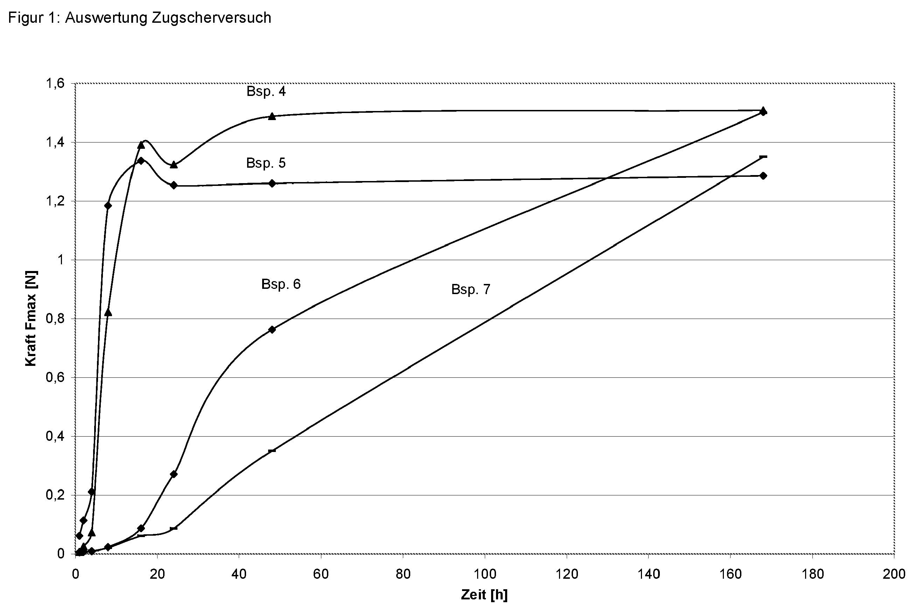

### Zugscherversuch - Ergebnisse (siehe Figur 1)

In Figur 1 sind die gemäß der oben näher beschriebenen Methode ermittelten Werte der Bruchkraft in Abhängigkeit vom Zeitpunkt der durchgeführten Messung aufgetragen, wobei der letzte Wert 48 h nach erfolgter Verklebung ermittelt wurde. Die Kurven der Beispiele 6 und 7 (Titan- bzw. Zirkonium-Katalysator) zeigen, dass mit den entsprechenden Katalysatoren keine zufrieden stellende Aushärtung erreicht wird. Die für das erfindungsgemäße Beispiel 4 erhaltene Kurve hingegen zeigt, dass mit DBU eine katalytische Aktivität realisiert wird, die der Aktivität eines herkömmlichen Zinn-Katalysators (Beispiel 5) gleichkommt beziehungsweise diese noch übertrifft.

## Patentansprüche

1. Härtbare Zusammensetzung, mindestens enthaltend
A) mindestens ein Polymer mit mindestens einer Endgruppe der allgemeinen Formel (I)
-Aₙ-R-SiXYZ (I),
worin
A eine zweibindige, mindestens ein Heteroatom enthaltende Bindegruppe ist,
R ein zweibindiger Kohlenwasserstoffrest mit 1 - 12 C-Atomen ist, und
X, Y, Z Substituenten am Si-Atom und unabhängig voneinander C₁ - C₈ - Alkyl-, C₁ - C₈ - Alkoxy- oder C₁ - C₈ - Acyloxygruppen sind, wobei mindestens einer der Reste X, Y, Z eine C₁ - C₈ - Alkoxy- oder C₁ - C₈ - Acyloxygruppe ist, und
n 0 oder 1 ist;
B) mindestens eine cyclische Verbindung, die mindestens ein Strukturmotiv der Formel (II) 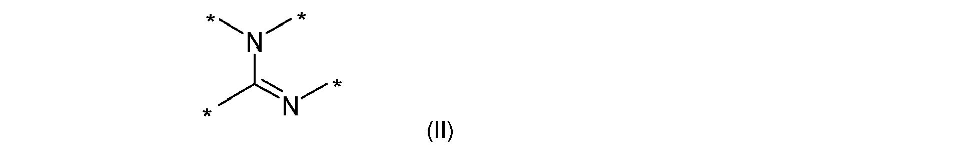 als Bestandteil der Ringstruktur enthält; wobei der mit * gekennzeichneten Positionen weiteren Ringatomen oder beliebigen sonstigen Atomen entsprechen; und
C) mindestens einen Cyclohexandicarbonsäuredialkylester, bei dem die Alkylreste der Estergruppen unabhängig voneinander jeweils 1 bis 20 C-Atome enthalten.

2. Härtbare Zusammensetzung gemäß Anspruch 1, **dadurch gekennzeichnet, dass** die zweibindige Bindegruppe A in der allgemeinen Formel (I)
ein Sauerstoffatom, eine Gruppe -NR'-, worin R' ein H-Atom oder ein Alkyl- oder Arylrest mit 1 bis 12 C-Atomen ist, oder eine Amid-, Carbamat-, Harnstoff-, Imino-, Carboxylat-, Carbamoyl-, Amidino-, Carbonat-, Sulfonat- oder Sulfinatgruppe ist.

3. Härtbare Zusammensetzung gemäß mindestens einem der Ansprüche 1 und 2,
**dadurch gekennzeichnet, dass** die Reste X, Y, Z in der allgemeinen Formel (I) jeweils unabhängig von einander eine Methyl-, eine Ethyl-, eine Methoxy- oder eine Ethoxygruppe sind, wobei mindestens einer der Reste eine Methoxy- oder Ethoxygruppe ist.

4. Härtbare Zusammensetzung gemäß mindestens einem der vorstehenden Ansprüche, **dadurch gekennzeichnet, dass** R in der allgemeinen Formel (I) eine Methylen-, Ethylen- oder n-Propylen-Gruppe ist.

5. Härtbare Zusammensetzung gemäß mindestens einem der vorstehenden Ansprüche, **dadurch gekennzeichnet, dass** der Cyclohexandicarbonsäuredialkylester in den Estergruppen identische Alkylreste aufweist.

6. Härtbare Zusammensetzung gemäß mindestens einem der vorstehenden Ansprüche, **dadurch gekennzeichnet, dass** die Zusammensetzung als mindestens eine cyclische Verbindung, die mindestens ein Strukturmotiv der Formel (II) als Bestandteil der Ringstruktur enthält, 1,5-Diazabicyclo[4.3.0]non-5-en (DBN) oder 1,8-Diazabicyclo(5.4.0)undec-7-en (DBU) enthält.

7. Härtbare Zusammensetzung gemäß mindestens einem der vorstehenden Ansprüche, **dadurch gekennzeichnet, dass** die Zusammensetzung folgende Bestandteile in den angegebenen Gewichtsanteilen enthält:
| | |
|---|---|
| mindestens ein Polymer der allgemeinen Formel (I) | 5-75 Gew.-%, |
| mindestens eine cyclische Verbindung, die mindestens | |
| ein Strukturmotiv der allgemeinen Formel (II) als | |
| Bestandteil der Ringstruktur enthält, | 0,01-1 Gew.-%, |
| mindestens einen Cyclohexandicarbonsäuredialkylester, | |
| bei dem die Alkylreste der Estergruppen jeweils | |
| unabhängig voneinander 1 bis 20 C-Atome enthalten, | 1-45 Gew.-%, |
| einen oder mehrere Füllstoff(e) | 1-80 Gew.-%, |
| einen oder mehrere Hilfsstoff(e) | 0-10 Gew.-%, |
wobei sich die Gewichtsanteile zu 100 Gew.-% aufaddieren und die Gewichtsanteile auf das Gesamtgewicht der härtbaren Zusammensetzung bezogen sind.

8. Verwendung einer härtbaren Zusammensetzung gemäß mindestens einem der vorstehenden Ansprüche als Kleb-, Dicht- und/oder Beschichtungsstoff.

9. Verwendung einer Kombination eines Cyclohexandicarbonsäuredialkylesters, bei dem die Alkylreste der Estergruppen unabhängig voneinander jeweils 1 bis 20 C-Atome enthalten, mit einer cyclischen Verbindung, die mindestens ein Strukturmotiv der allgemeinen Formel (II) als Bestandteil der Ringstruktur enthält, als Weichmacher-Härtungskatalysator-System in härtbaren Zusammensetzungen.

## Claims

1. Curable composition, at least containing
A) at least one polymer with at least one terminal group of the general formula (I)
-Aₙ-R-SiXYZ (I)
where
A is a divalent bonding group containing at least one heteroatom,
R is a divalent hydrocarbon radical with 1-12 carbon atoms, and
X, Y, Z are substituents on the Si atom and, independently of one another, C₁-C₈ alkyl, C₁-C₈ alkoxy or C₁-C₈ acyloxy groups, wherein at least one of the radicals X, Y, Z is a C₁-C₈ alkoxy or C₁-C₈ acyloxy group, and
n is 0 or 1;
B) at least one cyclic compound containing at least one structural motif of the formula (II) 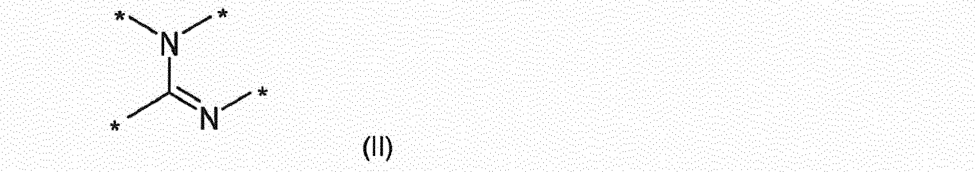 as a part of the ring structure, wherein the positions marked with * correspond to additional ring atoms or any other atoms;
and
C) at least one cyclohexanedicarboxylic acid dialkyl ester, in which the alkyl radicals of the ester groups each contain, independently of one another, 1 to 20 carbon atoms.

2. Curable composition according to claim 1, **characterized in that** the divalent bonding group A in general formula (I) is an oxygen atom, an -NR'- group, wherein R' is an H atom or an alkyl or aryl radical with 1 to 12 carbon atoms or an amide, carbamate, urea, imino, carboxylate, carbamoyl, amidino, carbonate, sulfonate or sulfinate group.

3. Curable composition according to at least one of claims 1 and 2, **characterized in that** the radicals X, Y, Z in the general formula (I) are each, independently of one another, a methyl, an ethyl, a methoxy or an ethoxy group, wherein at least one of the radicals is a methoxy or ethoxy group.

4. Curable composition according to at least one of the preceding claims, **characterized in that** R in general formula (I) is a methylene, ethylene or n-propylene group.

5. Curable composition according to at least one of the preceding claims, **characterized in that** the cyclohexanedicarboxylic acid dialkyl ester has identical alkyl radicals in the ester groups.

6. Curable composition according to at least one of the preceding claims, **characterized in that** the composition contains 1,5-diazabicyclo[4.3.0]non-5-ene (DBN) or 1,8-diazabicyclo(5.4.0)undec-7-ene (DBU) as at least one cyclic compound having at least one structural motif of formula (II) as a part of the ring structure.

7. Curable composition according to at least one of the preceding claims, **characterized in that** the composition contains the following components in the stated amounts by weight:
| | |
|---|---|
| at least one polymer of general formula (I) | 5-75 wt% |
| at least one cyclic compound containing at least one structural motif | |
| of general formula (II) as a part of the ring structure | 0.01-1 wt% |
| at least one cyclohexanedicarboxylic acid dialkyl ester, in which the | |
| alkyl radicals of the ester groups each contain, independently of one | |
| another, 1 to 20 carbon atoms | 1-45 wt% |
| one or more fillers | 1-80 wt% |
| one or more additives | 0-10 wt%, |
wherein the amounts by weight add up to 100 wt% and the amounts by weight are based on the total weight of the curable composition.

8. Use of a curable composition according to at least one of the preceding claims as an adhesive, sealant and/or coating agent.

9. Use of a combination of a cyclohexanedicarboxylic acid dialkyl ester in which the alkyl radicals of the ester groups independently of one another each contain 1 to 20 carbon atoms, with a cyclic compound containing at least one structural motif of general formula (II) as a part of the ring structure, as a plasticizer-curing catalyst system in curable compositions.

## Revendications

1. Composition durcissable, comprenant
A) au moins un polymère pourvu d'au moins un groupe terminal de la formule générale (I)
- An-R-SiXYZ (I),
où
A est un groupe de liaison divalent contenant au moins un hétéroatome,
R est un radical hydrocarboné divalent ayant 1 à 12 atomes de carbone, et
X, Y, Z sont des substituants au niveau de l'atome Si et indépendamment des groupes alkyle en C₁ à C₈,
alcoxyen C₁ à C₈ ou acyloxy en C₁ à C₈, l'unau moins de radicaux X, Y, Z étant un groupe alcoxyen C₁ à C₈ ou acyloxy en C₁ à C₈, et n est égal à 0 ou 1 ;
B) au moins un composé cyclique qui contient au moins un motif structurel de la formule (II) 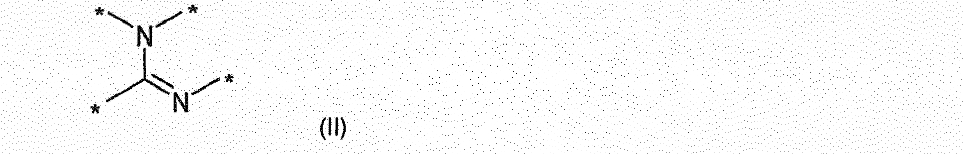 faisant partie de la structure cyclique ; des atomes de cycle ou d'autres quelconques correspondant aux positions **caractérisées par** * ; et
C) au moins un dialkylester de l'acide cyclohexane-dicarboxylique dans lequel les radicaux alkyle des groupes ester contiennent indépendamment chacun 1 à 20 atomes de carbone.

2. Composition durcissable selon la revendication 1, **caractérisé en ce que** le groupe de liaison divalent A de la formule générale (I) est
un atome d'oxygène, un groupe -NR'-, où R'est un atome d'hydrogène ou un radical alkyle ou aryle ayant 1 à 12 atomes de carbone, ou un groupe amide, carbamate, urée, imino, carboxylate, carbamoyle, amidino, carbonate, sulfonate ou sulfinate.

3. Composition durcissable selon l'une des revendications 1 et 2, **caractérisée en ce que** les radicaux X, Y, Z de la formule générale (I) sont chacun indépendamment un groupe méthyle, éthyle, méthoxy ou éthoxy, l'un au moins des radicaux étant méthoxy ouéthoxy.

4. Composition durcissable selon l'une des revendications précédentes, **caractérisée en ce que** R dans la formule générale (I) est un groupe méthylène, éthylène ou n-propylène.

5. Composition durcissable selon l'une des revendications précédentes, **caractérisée en ce que** le dialkylesterde l'acide cyclohexane-dicarboxyliquedans les groupes ester comporte des radicaux alkyle identiques.

6. Composition durcissable selon l'une des revendications précédentes, **caractérisée en ce que** la composition contient en tant qu'au moins un composé cyclique, qui contient au moins un motif structurel de la formule (II) faisant partie de la structure cyclique, le 1,5-diazabicyclo[4.3.0]non-5-ène (DBN) ou le 1,8-diazabicyclo(5.4.0)undéc-7-ène (DBU).

7. Composition durcissable selon l'une des revendications précédentes, **caractérisée en ce que** la composition contient les composants suivants dans les proportions en poids indiquées :
| | |
|---|---|
| au moins un polymère de la formule générale (I) | 5 à 75% en poids, |
| au moins un composé cycliquequi contient | |
| au moinsun motif structurelde la formule générale (II) | |
| faisant partie de la structure cyclique, | 0,01 à 1% en poids, |
| au moins un dialkylester de l'acide cyclohexane-dicarboxylique, | |
| dans lequel les radicaux alkyle des groupes ester contiennent | |
| chacun indépendamment de 1 à 20 atomes de carbone, | 1 à 45% en poids, |
| une ou plusieurs charges | 1 à 80% en poids, |
| un ou plusieurs agents accessoires | 0 à 10% en poids, |
les pourcentages en poids s'ajoutant pour donner 100% en poids et les pourcentages en poids étant donnés par rapport au poids total de la composition durcissable.

8. Utilisation d'une composition durcissable selon l'une au moins des revendications précédentes comme produit adhésif, produit d'étanchéité et/ou produit de revêtement.

9. Utilisation d'une combinaison d'un dialkylesterde l'acide cyclohexane-dicarboxylique, dans laquelle les radicaux alkyle des groupes ester contiennent chacun indépendamment 1 à 20 atomes de carbone, avec un composé cyclique qui contient au moins un motif structurel de la formule générale (II) faisant partie de la structure cyclique, commesystème de catalyseur de durcissement de plastifiant dans des compositions durcissables.
